# EUROPEAN PATENT SPECIFICATION

(11) **EP 4 128 665 B1**
(45) Date of publication and mention of the grant of the patent: **27.11.2024**
(21) Application number: 21714086.2
(22) Date of filing: 04.03.2021
(51) Int. Cl.: H04L 41/14, H04L 41/16

(54) **DYNAMIC OFFLOADING OF CLOUD ISSUE GENERATION TO ON-PREMISE ARTIFICIAL INTELLIGENCE**
DYNAMISCHE ABLADUNG VON CLOUD-PROBLEMERZEUGUNG ZUR VOR ORT KÜNSTLICHEN INTELLIGENZ
DÉLESTAGE DYNAMIQUE DE CRÉATION DE PROBLÈME EN NUAGE VERS UNE INTELLIGENCE ARTIFICIELLE SUR SITE

(30) Priority: 26.03.2020 US 202016831200
(43) Date of publication of application: 08.02.2023
(73) Proprietor: Cisco Technology, Inc., San Jose, California 95134-1706 (US)
(72) Inventor: DI PIETRO, Andrea, 1033 Cheseaux-sur-Lausanne (CH); DASGUPTA, Sukrit, Norfolk, Massachusetts 02056 (US)
(74) Representative: Warren, Caroline Elisabeth
(86) International application number: PCT/US2021/020880
(87) International publication number: WO 2021/194717

(56) References cited:
- US-A1- 2019 079 898
- US-A1- 2019 370 218

## Description

### TECHNICAL FIELD

This disclosure relates to network system monitoring with artificial intelligence ("AI") and, more specifically, to dynamically offloading a model generated with machine learning to an on-premise AI engine to reduce the operating load on a cloud AI engine.

### BACKGROUND

In conventional network systems managed by artificial intelligence ("AI"), data is provided to an AI engine by users, devices, applications, network service data providers, or others. The data may include problems with the network, issues reported by users, dropped network connections, rapidly changing connections, or other network problems or issues.

Conventional network systems may use an AI engine that is cloud-based to manage the system by building a model of the network to monitor the network, provide load management decisions, determine the health of the network, predict trends, detect patterns, or perform other conventional services. The Al engine is able to provide data to a user of the network, such as insights about the behavior of the network and issues that have arisen with the network.

When the AI engine is strictly cloud based, the data must be communicated over the cloud to a data lake associated with the cloud-based AI engine. The constant communication of data is cumbersome and requires significant bandwidth and costs to communicate. Further, the cloud-based AI engine is burdened with the constant monitoring of the new data from the system and any other systems monitored by the cloud-based AI engine. Thus, the capacity and efficiency of the cloud-based AI engine is reduced due to the monitoring of the new data. Additionally, when the connection to the cloud is interrupted, the AI engine is unable to provide issues and insights into the network.

US 2019/0370218 discloses a network assurance service that deploys a machine-learning based model to a network to assess a set of input features comprising measurements from the network. The service monitors performance of the machine learning model and may replace the model with an alternative model.

### BRIEF DESCRIPTION OF THE DRAWINGS

Figure 1 is a block diagram depicting a communications and processing architecture to dynamically offload cloud issue generation to on-premise artificial intelligence, in accordance with certain examples.
Figure 2 is a block flow diagram depicting a method to dynamically offload cloud issue generation to on-premise artificial intelligence, in accordance with certain examples.
Figure 3 is a block flow diagram depicting a method for an on-premise cloud agent to execute a model, in accordance with certain examples.
Figure 4 depicts a computing machine and a module in accordance with certain examples.

### DETAILED DESCRIPTION

### Overview

Aspects of the invention are set out in the independent claims and preferred features are set out in the dependent claims. Features of one aspect may be applied to any aspect alone or in combination with other aspects.

The present technology allows a hybrid approach to using AI engines to perform issue and insight generation, leveraging both on-premise and cloud components.

During an initial calibration phase, a cloud AI engine builds a model of a network via a machine learning module. Data is received by the cloud AI engine, where a model for the network is computed based both on the received data and optionally on data from other networks or customers. During the calibration, outbputs generated in the cloud AI engine may be sent to an on-premise cloud agent, which will make that information available to the customer. The outputs of the model may include issues with the network and insights into the performance and trends of the network.

A model evaluation engine, or other component of the cloud AI engine, monitors the model and the outputs of the model to identify convergence of the specific model. The model evaluation engine identifies the convergence by comparing the outputs to objective criteria or computer-generated criteria. The convergence ensures that the quality of the generated issues and insights is meeting the expected quality criteria. In an alternate example, the convergence is identified by a human operator of the cloud AI engine or by using objective criteria. In another example, customer feedback is evaluated to determine when convergence has been achieved.

After the model evaluation engine has determined that the model has converged, the cloud AI engine communicates the model to the on-premise cloud agent. A model update proxy configures the on-premise cloud agent to use the new computed model with received data. The model update proxy verifies that the on-premise cloud agent is ready to generate outputs, such as issues and insights.

The on-premise cloud agent begins to use the model with data being received from the network computing devices. The model enables the on-premise cloud agent to generate issues and insights on-premise. The on-premise cloud agent disables data export to the cloud AI engine. The on-premise cloud agent exports any generated issues and insights to the cloud AI engine and/or to a user device or user interface for reporting to the user. The communication to the cloud AI engine allows for telemetry and tracking of the generated issues and insights to ensure that the performance of the on-premise cloud agent is operating appropriately. While the on-premise cloud agent is operating the model for the network, bandwidth and communication capacity are not being used to communicate the data to the cloud AI engine. Compute resources in the cloud are also not being used to compute the model.

A cloud model performance monitoring engine of the cloud Al engine continuously or periodically monitors the behavior of the model being operated by the on-premise cloud agent. The on-premise cloud agent may periodically communicate data to the cloud AI engine for storage in the data lake. The data may be communicated periodically based on a set schedule or at the request of an operator. The communicated data allows the cloud AI engine to monitor the data to look for anomalies, trends, or other potential problems or issues.

The cloud model performance monitoring engine may use the data in the data lake to periodically verify the operations of the on-premise cloud agent. The model performance monitoring engine uses the same data sources as the model evaluation engine to make sure that the quality of the issues and insights generated by the model operated by the on-premise cloud agent do not decrease over time. If the quality drops below a given threshold, the cloud model performance monitoring engine will restart the calibration phase. The threshold may be a function of the accuracy of the outputs. For example, if issues generated by the model are not determined to be actual issues, then the quality of that output is determined to be low. If, however, user complaints match the issue generated by the model indicating that the issue was an actual issue, then the quality of the output is determined to be high. In another example, the threshold may be a function of the validity of an output. For example, if the insights indicate a trend that a device of the network 140 is likely to suffer an imminent failure, and the failure does occur, then the output is determined to be of a high quality.

If the cloud model performance monitoring engine determines that a recalibration is needed, the cloud model performance monitoring engine will disable issue generation for the on-premise cloud agent and enable data export by the on-premise cloud agent to the cloud AI engine. The model will be recalibrated with the same procedure as described herein with respect to the initial calibration. The recalibrated model may use previously collected data, newly received raw data, or raw data that is received periodically from the on-premise cloud agent during operation of the on-premise cloud agent.

The present technology allows a machine learning model to be configured on a cloud-based AI engine and be deployed to an on-premise cloud agent. This deployment allows for reduced communications of data from the network devices to the cloud AI engine. The transmission of data to the cloud AI engine can be paused after the model has been deployed. Further, if the cloud connectivity is lost during operations, the issue generation and anomaly detection can still operate via the on-premise cloud agent. Periodic sampling of data and periodic review of the issue and insight generation from the on-premise cloud agent can be used to determine if a new model configuration is required. Configuring the model in the cloud AI engine allows for the cloud AI engine to utilize other models and data sources in the configuration and calibration. Offloading the operation of the configured model to the on-premise cloud agent allows the model to be operated using less communication bandwidth to the cloud AI engine. The cloud AI engine monitors the performance of the on-premise cloud agent to ensure that the model is operating properly. Further, cloud AI engines may have more capacity to create more thorough models, while one-premise cloud agents may be operated by computing devices with less capacity and processing bandwidth.

These and other aspects, objects, features, and advantages of the technology will become apparent to those having ordinary skill in the art upon consideration of the following detailed description of illustrated examples.

### Example System Architecture

In example architectures for the technology, while each server, system, network, and device shown in the architecture is represented by one instance of the server, system, or device, multiple instances of each can be used. Further, while certain aspects of operation of the technology are presented in examples related to the figures to facilitate enablement of the claimed invention, additional features of the technology, also facilitating enablement of the claimed invention, are disclosed elsewhere herein.

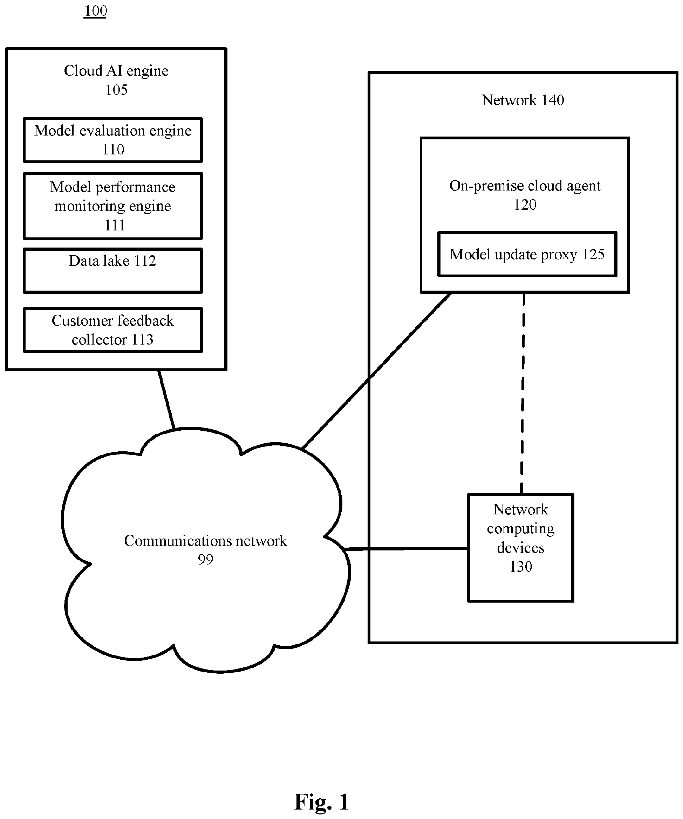

Figure 1 is a block diagram depicting a communications and processing architecture 100 to dynamically offload cloud issue generation to on-premise artificial intelligence. As depicted in Figure 1, the architecture 100 includes a cloud AI engine 105 and a network 140 connected by communications network 99.

The cloud AI engine 105 uses modules or components to perform assorted tasks to configure and monitor models to generate issues and insights for network systems. In general, the cloud AI engine 105 can employ a variety of tools, applications, and devices. The cloud AI engine 105 receives a continuous or periodic feed of data from any deployed on-premise cloud agents, such as on-premise cloud agent 120, and stores the data into a data lake 112 unique to the network 140 on which the on-premise cloud agent 120 is deployed. Collecting the data allows the cloud AI engine 105 to leverage a rich dataset from multiple customers, verticals, or deployments to train effective machine learning models for generating network issues and insights. Also, the cloud AI engine 105 is responsible for creating the machine learning models run by the on-premise cloud agent 120.

The cloud AI engine 105 employs a model evaluation engine 110, a model performance monitoring engine 111, data lake 112, and a customer feedback collector 113. The model evaluation engine 110 verifies convergence of the specific model by ensuring that the quality of the generated issues and insights meets expected quality criteria. The model evaluation engine 110 analyzes the quality of the issues and insights generated by the model. The model evaluation engine 110 can analyze the quality by using objective criteria, such as a number of raised issues, a distance of the determined values from the expected values, or other objective criteria. In an alternate example, an analysis can be done via a human expert in the loop, such as by manually validating the quality of the raised issues.

The customer feedback collector 113 can be used to help determine model convergence. The customer feedback collector 113 can query a user to provide feedback about the cloud generated outputs. The outputs, such as issues and insights may be relayed to the on-premise cloud agent 120 or another computing device and displayed on a local user interface to allow the user to rate them. The feedback may be sent to the customer feedback collector 113 and used in the process to determine model convergence.

The model performance monitoring engine 111 continuously or periodically monitors the behavior of the model installed on the on-premise cloud agent 120. The model performance monitoring engine 111 also may keep the data lake for model computation up to date. The model performance monitoring engine 111 may use the same data sources as the model evaluation engine 110 or other data sources to ensure that the quality of the on-premise model generated outputs does not decrease over time. If the output quality drops below a given threshold, the model performance monitoring engine 111 will initiate a restart of the calibration phase.

The model evaluation engine 110 may combine the output of the evaluation criteria, such as an operator input, objective criteria, and user feedback, to evaluate model convergence. In one embodiment, distinct thresholds can be specified for each criterion to determine that the model has converged (for example, at least 80% positive feedback from the customer). In another embodiment, reinforcement learning can be used to integrate the user and human expert feedback in the model to allow the model to converge. The model is determined to have converged when the output of the model is accurately presenting issues, insights, and other outputs, and the model is determined to be sufficiently trained for use in an on-premise cloud agent 120. After the model evaluation engine 110 has determined that the model has converged, the model evaluation engine 110 pushes the model to the on-premise cloud agent 120.

The on-premise cloud agent 120 and the network computing devices 130 are part of the network 140. In alternate examples, the on-premise cloud agent 120 works with the network 140, but is not part of the network 140. The network 140 may be any suitable computing network for communications, process control, data storage, or any other suitable network computing function.

The on-premise cloud agent 120 may utilize an on-premise AI engine or other tools to receive the model, initiate the model, operate the model, receive data from network computing devices 130, report issues and insights to a user and/or the cloud AI engine 105, or any other suitable tasks. The on-premise cloud agent 120 may exchange communications with one or more network computing devices 130 to obtain network data, query user inputs, provide data outputs, or perform any other suitable tasks. The on-premise cloud agent utilizes a module such as a model update proxy 125. The model update proxy 125 configures the on-premise cloud agent 120 to use the newly received model with received data. The model update proxy 125 verifies that the on-premise cloud agent 120 is ready to generate issues and insights, such as by ensuring that all the data input windows of the model have been filled. The model update proxy 125 additionally disables the existing data export to the cloud.

The data to configure and operate the model is received from network computing devices 130. The network computing devices 130 include user devices, applications, network service data providers, routers, servers, network controllers, or other devices. The data may include problems with the network 140, issues reported by users, dropped network connections, rapidly changing connections, or other network problems or issues. The network computing devices 130 may communicate via the communications network 99 or via any other suitable communication technology, such as Wi-Fi, Bluetooth, cellular, or other suitable communication technologies.

Each of the cloud AI engine 105, on-premise cloud agent 120, and network computing devices 130, includes one or more wired or wireless telecommunications systems by which network devices may exchange data. For example, cloud AI engine 105, on-premise cloud agent 120, and network computing devices 130 may include one or more of a local area network (LAN), a wide area network (WAN), an intranet, an Internet, a storage area network (SAN), a personal area network (PAN), a metropolitan area network (MAN), a wireless local area network (WLAN), a virtual private network (VPN), a cellular or other mobile communication network, a BLUETOOTH ^{®} wireless technology connection, a near field communication (NFC) connection, any combination thereof, and any other appropriate architecture or system that facilitates the communication of signals, data, and/or messages.

Throughout the discussion of examples, it should be understood that the terms "data" and "information" are used interchangeably herein to refer to text, images, audio, video, or any other form of information that can exist in a computer-based environment.

Each network device, such as cloud AI engine 105, on-premise cloud agent 120, and network computing devices 130, can include a communication subsystem capable of transmitting and receiving data over the network(s). For example, each network device can include a server, or a partition of a server, router virtual machine (VM) or container, a portion of a router, a desktop computer, a laptop computer, a tablet computer, a television with one or more processors embedded therein and/or coupled thereto, a smart phone, a handheld computer, a personal digital assistant (PDA), or any other wired or wireless processor-driven device. In some examples, a user associated with a device must install an application and/or make a feature selection to obtain the benefits of the technology described herein.

The illustrated network connections are examples and other approaches for establishing a communications link between the computers and devices can be used. Additionally, those having ordinary skill in the art and having the benefit of this disclosure will appreciate that the network devices illustrated in Figure 1 may have any of several other suitable computer system configurations and may not include all the components described above.

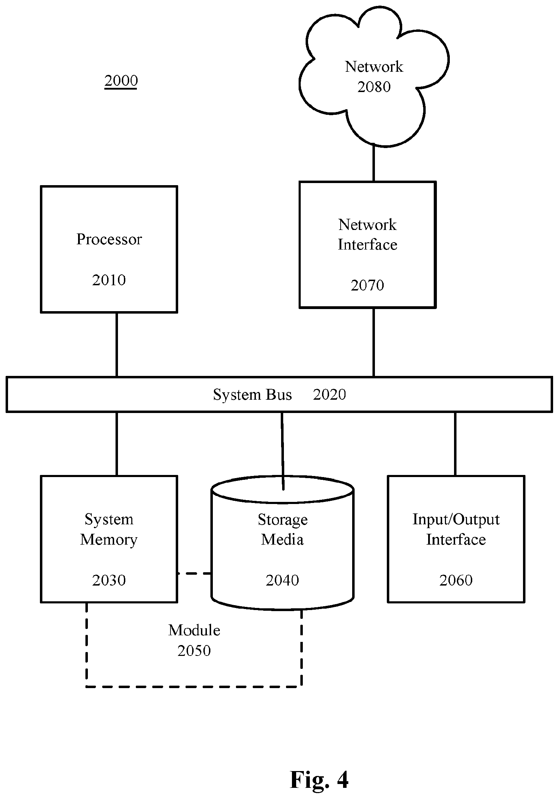

In examples, the network computing devices, and any other computing machines associated with the technology presented herein, may be any type of computing machine such as, but not limited to, those discussed in more detail with respect to Figure 4. Furthermore, any functions, applications, or components associated with any of these computing machines, such as those described herein or any others (for example, scripts, web content, software, firmware, hardware, or modules) associated with the technology presented herein may by any of the components discussed in more detail with respect to Figure 4. The computing machines discussed herein may communicate with one another, as well as with other computing machines or communication systems, over one or more networks, such as network 99. Each network may include various types of data or communications networks, including any of the network technology discussed with respect to Figure 4.

### Example Processes

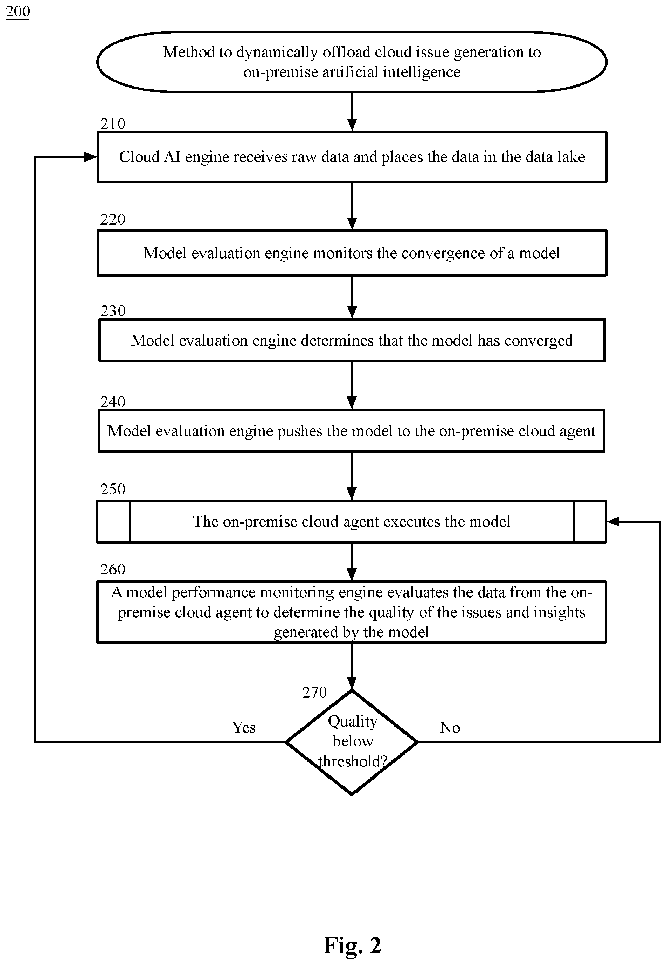

The example methods illustrated in Figures 2-3 are described hereinafter with respect to the components of the example communications and processing architecture 100. The components of the example communications and processing architecture 100 may include, but are not limited to, routers, switches, network hubs, wireless access points, network cables, network servers, AI engines, mobile devices, and network interface cards. The example methods of Figures 2-3 may also be performed with other systems and in other environments. The operations described with respect to any of Figures 2-3 can be implemented as executable code stored on a computer or machine readable non-transitory tangible storage medium (e.g., hard disk, ROM, EEPROM, nonvolatile RAM, CD-ROM, flash memory, random access memory (RAM), static random access memory (SRAM), dynamic random access memory (DRAM), and synchronous dynamic random access memory (SDRAM), etc.) that are completed based on execution of the code by a processor circuit implemented using one or more integrated circuits; the operations described herein also can be implemented as executable logic that is encoded in one or more non-transitory tangible media for execution (e.g., programmable logic arrays or devices, field programmable gate arrays, programmable array logic, application specific integrated circuits, etc.).

Figure 2 is a block flow diagram depicting a method 200 to dynamically offload cloud issue generation to on-premise artificial intelligence or agents, in accordance with certain examples.

In block 210, a cloud AI engine 105 receives raw data and places the data in the data lake 112. The received data is provided to the cloud AI engine 105 by network computing devices 130, users, devices, applications, network service data providers, or others associated with the network 140. In one example, the received data is communicated directly from the various devices or users. In another example, the data may be provided via the on-premise cloud agent 120 after the on-premise cloud agent 120 collects the data from the various devices or users. The data may include problems with the network 140, issues reported by users, dropped network connections, rapidly changing connections, or other network problems or issues. The data may further include data such as routing data, numbers of user devices, device statuses, or any other data associated with the performance or usage of the network 140. The data may be stored in the data lake 112 for access by the cloud AI engine 105 or in any other suitable location.

In block 220, a model evaluation engine 110 monitors the convergence of a model. The model evaluation engine 110 is a module, function, or other feature of the cloud AI engine 105. A model for the specific network 140 is generated by the cloud AI engine 105 based on the received data and optionally data from other customers. The model may be created via machine learning or any other type of training process to create the model. The cloud AI engine 105 uses the received data as inputs to a machine learning process to create the model.

During this configuration phase, issues will be generated in the cloud AI engine 105 and sent to the on-premise cloud agent 120, which will make them available to the customer. The generated model of the network 140 monitors the network 140, predicts trends, detects patterns, or performs any other service to keep the network 140 operational and efficient.

The model provides data to a user of the network 140, such as insights about the behavior of the network 140 and issues with the network 140. The model of the network 140 identifies issues, such as dropped connections, rapidly changing connections, power loss, inactive network computing devices 130, or any other identifiable issues. The model may generate insights into the behavior of the network 140, such as inefficient connections or routes, predictions about upcoming loading issues, trends of data usage, or any other insight that will allow a user or network controller to adjust settings or programming to make the network 140 more stable or efficient.

In block 230, the model evaluation engine 110 determines that the model has converged. The model has converged when the issues and insights generated by the model accurately represent the performance of the network 140. The convergence ensures that the quality of the generated issues and insights is meeting the expected quality criteria. The model is determined to have converged when the outputs are determined to be accurately represent the status of the network 140. For example, the outputs are accurate when the issues are identified that are later verified as actual issues and insights are identified that accurately predict the behavior of the network 140.

In one embodiment, the convergence is identified by a human operator of the cloud AI engine 105. The operator may review the issues and insights to determine if the model is accurately modeling the network 140 and providing useful data. In another example, customer feedback is evaluated to determine when convergence has been achieved. For example, a customer feedback monitoring component or module can be used to verify model convergence. Such component may query the customer or user to request feedback about the cloud generated issues. The query may be relayed to the on-premise cloud agent 120, and displayed on a local user interface where the user will rate the issues. This feedback may be communicated to the cloud AI engine 105 and be used to make the decision about model convergence. In another example, the model evaluation engine 110 uses objective criteria to verify the model convergence. For example, the obj ective criteria may include a number of issues detected per hour, the accuracy of the insights, the number of missed issues, or any other objective criteria.

The model evaluation engine 110 may combine the output of the three mentioned criteria -- human in the loop, objective criteria, and user feedback -- to evaluate the model convergence. For example, distinct thresholds can be specified for each criterion, such as a minimum percentage of positive feedback from the users. In another embodiment, reinforcement learning can be used to integrate the user and human expert feedback in the model. In an example, the quality of the issues and insights must meet a threshold to be determined to have converged. The threshold may be a function of the accuracy of the outputs. For example, if issues generated by the model are not determined to be actual issues, then the quality of that output is determined to be low. If, however, user complaints match the issue generated by the model indicating that the issue was an actual issue, then the quality of the output is determined to be high. In another example, the threshold may be a function of the validity of an output. For example, if the insights indicate a trend that a device of the network 140 is likely to suffer an imminent failure, and the failure does occur, then the output is determined to be of a high quality.

In block 240, the model evaluation engine 110 pushes the model to the on-premise cloud agent 120. The model evaluation engine 110 determined that the model is generating appropriate numbers of issues and insights and the issues and insights are of appropriate quality. The model evaluation engine 110 thus determines that the model may be operated by the on-premise cloud agent 120 with less supervision by the cloud AI engine 105. The model evaluation engine 110 communicates the model to the on-premise cloud agent 120 by any suitable technology, such as an Internet connection over the network 99, by email, by a cellular connection, or any other suitable communication technology.

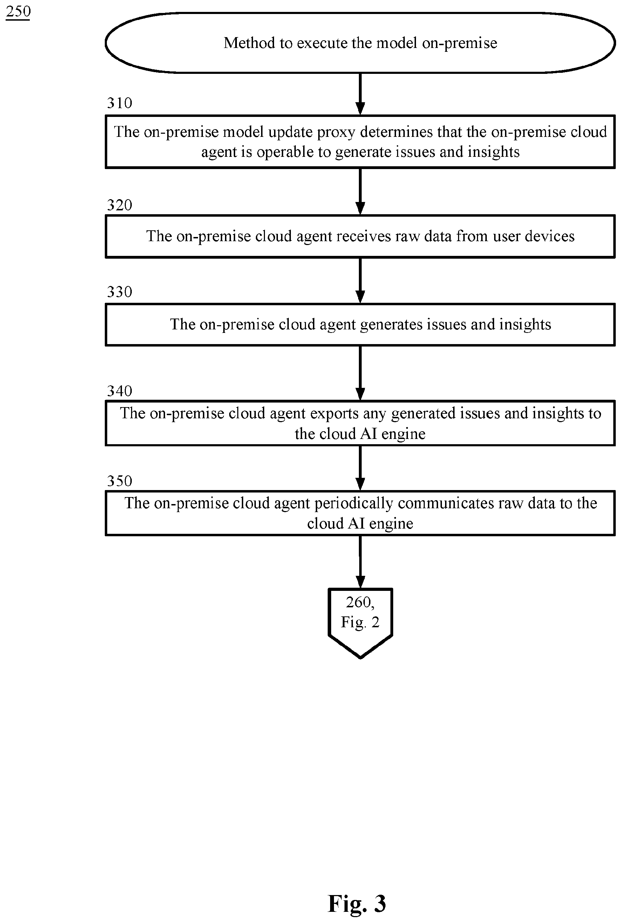

In block 250, the on-premise cloud agent 120 executes the model. Block 250 is described in greater detail herein with reference to the method 250 of Figure 3.

Figure 3 is a block flow diagram depicting a method 250 for an on-premise cloud agent 120 to execute a model, in accordance with certain examples.

In block 310, the on-premise model update proxy 125 determines that the on-premise cloud agent 120 is operable to generate issues and insights. The model update proxy 125 configures the on-premise cloud agent 120 to use the newly received model with received data. The model update proxy 125 verifies that the on-premise cloud agent 120 is ready to generate issues and insights, such as by ensuring that all the data input windows of the model have been filled. The model update proxy 125 additionally disables the existing data export to the cloud. In an example, the model update proxy 125 pauses the data export to the cloud. The on-premise cloud agent 120 will operate the model, and thus the regular communication of the data to the cloud AI engine 105 can be suspended.

In block 320, the on-premise cloud agent 120 receives raw data from network devices 130 and other sources. The received data is provided to the on-premise cloud agent 120 by users, devices, applications, network service data providers, or others. The data may include problems with the network 140, issues reported by users, dropped network connections, rapidly changing connections, or other network problems or issues. The data may further include normal data such as routing data, numbers of user devices, device statuses, or any other data associated with the performance or usage of the network 140. The data may be stored in any other suitable location associated with the on-premise cloud agent 120.

In block 330, the on-premise cloud agent 120 generates issues and insights based on the model. The model is able to provide valuable data to a user of the network 140, such as insights about the behavior of the network and issues with the network 140. The model of the network 140 identifies issues, such as dropped connections, rapidly changing connections, power loss, inactive network computing devices 130, or any other identifiable issues. The model may generate insights into the behavior of the network 140, such as inefficient connections or routes, predictions about upcoming loading issues, trends of data usage, or any other insight that will allow a user or network controller to adjust settings or programming to make the network 140 more stable or efficient.

In block 340, the on-premise cloud agent 120 exports any generated issues and insights to the cloud AI engine 105 and also to a user device or user interface for reporting to the user. The communication to the cloud AI engine 105 allows for logging and analysis of the generated issues and insights to ensure that the performance of the on-premise cloud agent 120 is in operating appropriately. The on-premise cloud agent 120 communicates the generated issues and insights to the cloud AI engine 105 by any suitable technology, such as an Internet connection over the network 99, by email, by a cellular connection, or any other suitable communication technology. The cloud AI engine 105 evaluates the communicated issues and insights as described in block 260 herein.

In block 350, the on-premise cloud agent 120 periodically communicates collected raw data to the cloud AI engine 105. The data may be communicated periodically based on a set schedule or at the request of an operator. In an example, data may be communicated only on the weekends. In another example, only one out of every 100 data entries are communicated to the cloud AI engine 105. In another example, the data is communicated only from certain network computing devices 130, such as only data from user mobile devices but not from other types of devices. In this manner, the cloud AI engine 105 is able to monitor the health of the model operating on the on-premise cloud agent 120 without utilizing excessive amounts of bandwidth or communication capacity.

In an alternate example, the data is communicated directly to the cloud AI engine 105 from the network computing devices 130 or other devices and not from the on-premise cloud agent 120 itself. Any suitable manner of obtaining the data by the cloud AI engine 105 may be employed. In another example, the data is communicated directly to the data lake 112.

From block 350, the method 250 returns to block 260 of Figure 2.

In block 260, a model performance monitoring engine 111 of the cloud AI engine 105 evaluates the data from the on-premise cloud agent 120 to determine the quality of the issues and insights generated by the model. The model performance monitoring engine 111 of the cloud AI engine 105 continuously or periodically monitors the behavior of the model being operated by the on-premise cloud agent 120. The model performance monitoring engine 111 obtains data directly from the data communicated by the on-premise cloud agent 120. In an alternate embodiment, the model performance monitoring engine 111 obtains data from the data lake 112.

In one example, the model performance monitoring engine 111 obtains and evaluates received issues and insights. The issues and insights allow the cloud AI engine 105 to monitor the data to look for anomalies or trends. For example, if the on-premise cloud agent 120 is identifying issues that are unreasonable or unlikely to be actual issues, then the model performance monitoring engine 111 may determine that the on-premise cloud agent 120 is not properly evaluating the data.

In another example, the model performance monitoring engine 111 uses the data received by the cloud AI engine 105 from the on-premise cloud agent 120 or from the network computing devices 130 to compute an updated model at the cloud AI engine 105. The issues and insights generated from the updated model at the cloud AI engine 105 may be compared to the outputs generated at the on-premise cloud agent 120. Based on this comparison, the model performance monitoring engine 111 determines if the two models have diverged, if the updated model at the on-premise cloud agent 120 is producing different results for any other reason, or if the outputs do not match. The model performance monitoring engine 111 uses the data in the data lake to periodically verify the operations of the on-premise cloud agent 120 to ensure that the quality of the model operated by the on-premise cloud agent 120 does not decrease over time. The model performance monitoring engine 111 may use received data from the on-premise cloud agent 120 in any suitable manner to determine if the model at the on-premise cloud agent 120 is performing the tasks appropriately and producing issues and insights of appropriate quality.

In block 270, the method 200 determines if the on-premise generated issues and insights are of a quality that is over a configured threshold. The threshold may be configured by an operator of the cloud AI engine 105, or any other suitable system. The threshold also may be configured by an operator of the on-premise cloud agent 120 or the network 140, or any other operator. The threshold also may be configured by a machine learning algorithm or process on the on-premise cloud agent 120, the cloud AI engine 105, or any other system. The threshold may fluctuate depending on the usage of the network 140 or any other system. The threshold may be calculated or configured periodically or continually. Any other suitable party, algorithm, system, or process may configure the appropriate threshold.

The threshold may be a function of the accuracy of the outputs. For example, if issues generated by the model are not determined to be actual issues, then the quality of that output is determined to be low. If, however, user complaints match the issue generated by the model indicating that the issue was an actual issue, then the quality of the output is determined to be high. In another example, the threshold is a function of the validity of the output. For example, if the insights indicate a trend that a device of the network 140 is likely to suffer an imminent failure, and the failure does occur, then the output is determined to be of a high quality.

If the issue quality drops below the configured threshold, the cloud model performance monitoring engine 111 will follow the YES branch to return to block 210 to recreate the model. If the model performance monitoring engine 111 determines that a recalibration is needed, the model performance monitoring engine 111 disables issue and insight generation for the on-premise cloud agent 120 and enables data export by the on-premise cloud agent 120 to the cloud AI engine 105. While the reconfiguration of the model is being performed, the cloud AI engine 105 works with the network 140 to provide issues and insights to a user, a network computing device 130, or any other interested party. That is, the cloud AI engine 105 takes over the monitoring of the network 140 while the new model is being calibrated for the on-premise cloud agent 120.

The model is re-computed with the same procedure as described in blocks 210 to 230. The model evaluation engine 110 of the cloud AI engine 105 monitors the model and the outputs of the model to identify the convergence of the specific model. In another example, the existing model is updated. That is, a new model is not created with only new data. Instead, the existing model is updated with new data and an updated model is calibrated or configured.

After the model evaluation engine has determined that the model has converged as described herein, the cloud AI engine 105 communicates the model to the on-premise AI engine 120. The on-premise AI engine 120 executes the received model as described in block 250.

Returning to block 270, if the quality is above the threshold, the method 200 follows the NO branch of block 270 to return to block 250. The on-premise AI engine 120 continues to operate the model and the model performance monitoring engine 111 continues to evaluate the data from the on-premise cloud agent 120 to determine the quality of the issues and insights generated by the model. When the on-premise AI engine 120 is operating properly and the issues and insights generated by the model are of sufficient quality, the process continues uninterrupted.

### Example Systems

Figure 4 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components, for example, a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a vehicular information system, one more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor (DSP), an application specific integrated circuit (ASIC), a graphics processing unit (GPU), a field programmable gate array (FPGA), a programmable logic device (PLD), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, co-processors, or any combination thereof. According to certain examples, the processor 2010 along with other components of the computing machine 2000 may be a virtualized computing machine executing within one or more other computing machines.

The system memory 2030 may include non-volatile memories, for example, read-only memory (ROM), programmable read-only memory (PROM), erasable programmable read-only memory (EPROM), flash memory, or any other device capable of storing program instructions or data with or without applied power. The system memory 2030 may also include volatile memories, for example, random access memory (RAM), static random access memory (SRAM), dynamic random access memory (DRAM), and synchronous dynamic random access memory (SDRAM). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device, for example, the storage media 2040.

The storage media 2040 may include a hard disk, a floppy disk, a compact disc read only memory (CD-ROM), a digital versatile disc (DVD), a Blu-ray disc, a magnetic tape, a flash memory, other non-volatile memory device, a solid state drive (SSD), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules, for example, module 2050, data, or any other information. The storage media 2040 may be part of, or connected to, the computing machine 2000. The storage media 2040 may also be part of one or more other computing machines that are in communication with the computing machine 2000, for example, servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits, for example, microcode or configuration information for an FPGA or other PLD.

The input/output (I/O) interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, for example, small computer system interface (SCSI), serial-attached SCSI (SAS), fiber channel, peripheral component interconnect (PCI), PCI express (PCIe), serial bus, parallel bus, advanced technology attached (ATA), serial ATA (SATA), universal serial bus (USB), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or analog communication media, for example, fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to certain examples, any of the processor 2010, the other elements of the computing machine 2000, or the various peripherals discussed herein may be integrated into a single device, for example, a system on chip (SOC), system on package (SOP), or ASIC device.

In summary, the present technology allows a hybrid approach to using artificial intelligence engines to perform issue generation, leveraging both on-premise and cloud components. In the technology, a cloud-based computing device receives data associated with a computing network of devices and uses machine-learning to create a model of the computing network. The cloud-based computing device communicates the model to a computing system located on-premise with the computing network and receives data related to the issues and insights created by the on-premise computing system. The cloud-based computing device determines if the on-premise computing system is producing issues and insights below a threshold quality. If yes, the cloud-based computing device updates the model based on updated data associated with the computing network and communicates the updated model to the on-premise computing system.

Examples may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing examples in computer programming, and the examples should not be construed as limited to any one set of computer program instructions. Further, a skilled programmer would be able to write such a computer program to implement an example of the disclosed examples based on the appended flow charts and associated description in the application text. Therefore, disclosure of a particular set of program code instructions is not considered necessary for an adequate understanding of how to make and use examples. Further, those skilled in the art will appreciate that one or more aspects of examples described herein may be performed by hardware, software, or a combination thereof, as may be embodied in one or more computing systems. Additionally, any reference to an act being performed by a computer should not be construed as being performed by a single computer as more than one computer may perform the act.

The examples described herein can be used with computer hardware and software that perform the methods and processing functions described previously. The systems, methods, and procedures described herein can be embodied in a programmable computer, computerexecutable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

The example methods are performed herein by example components and devices. Other components and devices may be used in alternative examples. Accordingly, such alternative examples are included in the scope of the following claims, which are to be accorded the broadest interpretation so as to encompass such alternate examples.

Although specific examples have been described above in detail, the description is merely for purposes of illustration. It should be appreciated, therefore, that many aspects described above are not intended as required or essential elements unless explicitly stated otherwise.

## Claims

1. A method, comprising:
by a cloud-based computing device (105):
receiving data associated with a computing network of devices (140);
generating a model to monitor the computing network;
communicating the model to a computing system (120) located on-premise with the computing network;
receiving further data associated with the computing network;
determining that the on-premise computing system is executing below a model quality threshold;
updating the model based on the further data; and
communicating the updated model to the computing system located on-premise with the computing network;
wherein determining that the on-premise computing system is executing below a model quality threshold comprises, by the cloud-based computing device:
computing an updated model based on the further data and operating the updated model by the cloud-based computing device; and
comparing an output of the model operated by the on-premise computing system with an output of the updated model operated by the cloud-based computing device to identify that the outputs do not match.

2. The method of claim 1, wherein the model is generated based on a machine learning process, wherein, to generate the model, the machine learning process optionally incorporates the received data and data received from at least one additional computing network.

3. The method of claim 1 or 2, wherein the on-premise computing system creates outputs by executing the model with the received data, wherein the outputs of the model optionally comprise one or more of: issues with the computing network and insights into the computing network.

4. The method of any of claims 1 to 3, wherein updating the model comprises creating a new model.

5. The method of any of claims 1 to 4, wherein the on-premise computing system receives data associated with the devices of the computing network to execute the model on-premise.

6. The method of any of claims 1 to 5, further comprising determining that the model has converged such that the outputs of the model accurately represent the status of the network before communicating the model to the on-premise computing system.

7. The method of claim 6, wherein the determination that the model has converged is based on one of: an input received by the cloud-based computing device; objective criteria; and feedback received by the cloud-based computing device.

8. The method of any of claims 1 to 7, further comprising instructing the on-premise computing system to stop providing outputs to a user based on the determination that the on-premise computing system is executing below the model quality threshold.

9. The method of any of claims 1 to 8, further comprising:
determining that the on-premise computing system is producing issues and insights above a threshold quality; and
periodically receiving data associated with the computing network of devices.

10. The method of claim 9, wherein the periodically received data is less than the data received in the first receiving step.

11. The method of claim 9 or 10, further comprising:
creating the updated model from the periodically received data;
using the updated model to generate outputs; and
comparing the outputs generated from the periodically received data with the outputs received from the on-premise computing system to determine that the on-premise computing system is executing below the model quality threshold.

12. A cloud-based computing device (105):
means for receiving data associated with a computing network of devices (140);
means for generating a model to monitor the computing network;
means for communicating the model to a computing system (120) located on-premise with the computing network;
means for receiving further data associated with the computing network;
means for determining that the on-premise computing system is executing below a model quality threshold;
means for updating the model based on the further data; and
means for communicating the updated model to the computing system located on-premise with the computing network;
wherein the means for determining that the on-premise computing system is executing below a model quality threshold comprises:
means for computing an updated model based on the further data and operating the updated model by the cloud-based computing device; and
means for comparing an output of the model operated by the on-premise computing system with an output of the updated model operated by the cloud-based computing device to identify that the outputs do not match.

13. A cloud-based computing device according to claim 12 further comprising means for implementing the method according to any of claims 2 to 11.

14. A computer program, computer program product or computer readable medium comprising instructions which, when executed by a computer, cause the computer to carry out the steps of the method of any of claims 1 to 11.

## Patentansprüche

1. Verfahren, das Folgendes umfasst:
durch ein Cloud-basiertes Rechengerät (105):
Empfangen von Daten, die mit einem Rechengerätenetzwerk (140) assoziiert sind;
Erzeugen eines Modells zur Überwachung des Rechennetzwerks;
Übermitteln des Modells an ein Rechensystem (120), das sich vor Ort mit dem Rechennetzwerk befindet;
Empfangen weiterer Daten, die mit dem Rechennetzwerk assoziiert sind;
Feststellen, dass das Rechensystem vor Ort unterhalb einer Modellqualitätsschwelle arbeitet;
Aktualisieren des Modells auf der Basis der weiteren Daten; und
Übermitteln des aktualisierten Modells an das Rechensystem, das sich vor Ort mit dem Rechennetzwerk befindet;
wobei das Feststellen, dass das Rechensystem vor Ort unterhalb eines Modellqualitätsschwellenwerts arbeitet, durch das Cloud-basierte Rechengerät Folgendes umfasst:
Berechnen eines aktualisierten Modells auf der Basis der weiteren Daten und Betreiben des aktualisierten Modells durch das Cloud-basierte Rechengerät; und
Vergleichen eines Ausgangs des von dem Rechensystem vor Ort betriebenen Modells mit einem Ausgang des von dem Cloud-basierten Rechengerät betriebenen aktualisierten Modells, um festzustellen, dass die Ausgänge nicht übereinstimmen.

2. Verfahren nach Anspruch 1, wobei das Modell auf der Basis eines Machine-Learning-Prozesses erzeugt wird, wobei der Machine-Learning-Prozess zum Erzeugen des Modells optional die empfangenen Daten und die von mindestens einem zusätzlichen Rechennetzwerk empfangenen Daten einbezieht.

3. Verfahren nach Anspruch 1 oder 2, wobei das Rechensystem vor Ort Ausgänge durch Ausführen des Modells mit den empfangenen Daten erzeugt, wobei die Ausgänge des Modells optional eines oder mehrere umfassen von: Problemen mit dem Rechennetzwerk und Einblicken in das Rechennetzwerk.

4. Verfahren nach einem der Ansprüche 1 bis 3, wobei das Aktualisieren des Modells das Erzeugen eines neuen Modells umfasst.

5. Verfahren nach einem der Ansprüche 1 bis 4, wobei das Rechensystem vor Ort mit den Geräten des Rechennetzwerks assoziierte Daten zum Ausführen des Modells vor Ort empfängt.

6. Verfahren nach einem der Ansprüche 1 bis 5, das ferner das Feststellen umfasst, dass das Modell konvergiert hat, so dass die Ausgänge des Modells den Status des Netzwerks vor dem Übermitteln des Modells an das Rechensystem vor Ort genau repräsentieren.

7. Verfahren nach Anspruch 6, wobei die Feststellung, dass das Modell konvergiert hat, auf einem von dem Cloud-basierten Rechengerät empfangenen Eingang; objektiven Kriterien; oder von dem Cloud-basierten Rechengerät empfangenem Feedback basiert.

8. Verfahren nach einem der Ansprüche 1 bis 7, das ferner das Anweisen des Rechensystems vor Ort umfasst, die Versorgung eines Benutzers mit Ausgängen zu stoppen, auf der Basis der Feststellung, dass das Rechensystem vor Ort unterhalb des Modellqualitätsschwellenwerts arbeitet.

9. Verfahren nach einem der Ansprüche 1 bis 8, das ferner Folgendes umfasst:
Feststellen, dass das Rechensystem vor Ort Probleme und Einblicke oberhalb einer Qualitätsschwelle produziert; und
periodisches Empfangen von mit dem Rechengerätenetzwerk assoziierten Daten.

10. Verfahren nach Anspruch 9, wobei die periodisch empfangenen Daten geringer sind als die im ersten Empfangsschritt empfangenen Daten.

11. Verfahren nach Anspruch 9 oder 10, das ferner Folgendes umfasst:
Erzeugen des aktualisierten Modells anhand der periodisch empfangenen Daten;
Benutzen des aktualisierten Modells zum Erzeugen von Ausgängen; und
Vergleichen der aus den periodisch empfangenen Daten erzeugten Ausgänge mit den von dem Rechensystem vor Ort empfangenen Ausgängen, um festzustellen, dass das Rechensystem vor Ort unterhalb der Modellqualitätsschwelle arbeitet.

12. Cloud-basiertes Rechengerät (105):
Mittel zum Empfangen von Daten, die mit einem Rechengerätenetzwerk (140) assoziiert sind;
Mittel zum Erzeugen eines Modells zur Überwachung des Rechennetzwerks;
Mittel zum Übermitteln des Modells an ein Rechensystem (120), das sich vor Ort mit dem Rechennetzwerk befindet;
Mittel zum Empfangen weiterer Daten, die mit dem Rechennetzwerk assoziiert sind;
Mittel zum Feststellen, dass das Rechensystem vor Ort unterhalb einer Modellqualitätsschwelle arbeitet;
Mittel zum Aktualisieren des Modells auf der Basis der weiteren Daten; und
Mittel zum Übermitteln des aktualisierten Modells an das Rechensystem, das sich vor Ort mit dem Rechennetzwerk befindet;
wobei das Mittel zum Feststellen, dass das Rechensystem vor Ort unterhalb eines Modellqualitätsschwellenwerts arbeitet, Folgendes umfasst:
Mittel zum Berechnen eines aktualisierten Modells auf der Basis der weiteren Daten und Betreiben des aktualisierten Modells durch das Cloud-basierte Rechengerät; und
Mittel zum Vergleichen eines Ausgangs des von dem Rechensystem vor Ort betriebenen Modells mit einem Ausgang des von dem Cloud-basierten Rechengerät betriebenen aktualisierten Modells, um festzustellen, dass die Ausgänge nicht übereinstimmen.

13. Cloud-basiertes Rechengerät nach Anspruch 12, das ferner Mittel zum Implementieren des Verfahrens nach einem der Ansprüche 2 bis 11 umfasst.

14. Computerprogramm, Computerprogrammprodukt oder computerlesbares Medium mit Befehlen, die bei Ausführung durch einen Computer den Computer zum Ausführen der Schritte des Verfahrens nach einem der Ansprüche 1 bis 11 veranlassen.

## Revendications

1. Procédé comprenant :
par un dispositif infonuagique (105) :
la réception de données associées à un réseau informatique de dispositifs (140) ;
la génération d'un modèle de surveillance du réseau informatique ;
la communication du modèle à un système informatique (120) situé sur site avec le réseau informatique ;
la réception de données supplémentaires associées au réseau informatique ;
la détermination que le système informatique sur site est exécuté en dessous d'un seuil de qualité du modèle ;
la mise à jour du modèle en fonction des données supplémentaires ; et
la communication du modèle mis à jour au système informatique situé sur site avec le réseau informatique ;
dans lequel la détermination que le système informatique sur site est exécuté en dessous d'un seuil de qualité du modèle comprend, par le dispositif infonuagique:
le calcul d'un modèle mis à jour en fonction des données supplémentaires et l'exploitation du modèle mis à jour par le dispositif infonuagique ; et
la comparaison d'une sortie du modèle exploité par le système informatique sur site à une sortie du modèle mis à jour exploité par le dispositif infonuagique pour identifier que les sorties ne correspondent pas.

2. Procédé selon la revendication 1, dans lequel le modèle est généré sur la base d'un processus d'apprentissage automatique, dans lequel, pour générer le modèle, le processus d'apprentissage automatique incorpore éventuellement les données reçues et des données reçues à partir d'au moins un réseau informatique supplémentaire.

3. Procédé selon la revendication 1 ou 2, dans lequel le système informatique sur site crée des sorties en exécutant le modèle avec les données reçues, dans lequel les sorties du modèle comprennent éventuellement une ou plusieurs des sorties suivantes : problèmes avec le réseau informatique et renseignements sur le réseau informatique.

4. Procédé selon l'une quelconque des revendications 1 à 3, dans lequel la mise à jour du modèle comprend la création d'un nouveau modèle.

5. Procédé selon l'une quelconque des revendications 1 à 4, dans lequel le système informatique sur site reçoit des données associées aux dispositifs du réseau informatique pour exécuter le modèle sur site.

6. Procédé selon l'une quelconque des revendications 1 à 5, comprenant en outre la détermination que le modèle a convergé de telle sorte que les sorties du modèle représentent avec précision l'état du réseau avant la communication du modèle au système informatique sur site.

7. Procédé selon la revendication 6, dans lequel la détermination que le modèle a convergé est basée sur l'une des informations suivantes : une entrée reçue par le dispositif infonuagique ; des critères d'objectif ; et un retour d'informations reçu par le dispositif infonuagique.

8. Procédé selon l'une quelconque des revendications 1 à 7, comprenant en outre l'instruction au système informatique sur site d'arrêter de fournir des sorties à un utilisateur lorsqu'il a été déterminé que le système informatique sur site est exécuté en dessous du seuil de qualité du modèle.

9. Procédé selon l'une quelconque des revendications 1 à 8, comprenant en outre :
la détermination que le système informatique sur site produit des problèmes et des renseignements au-dessus d'un seuil de qualité ; et
la réception périodique de données associées au réseau informatique de dispositifs.

10. Procédé selon la revendication 9, dans lequel les données reçues périodiquement sont inférieures aux données reçues lors de la première étape de réception.

11. Procédé selon la revendication 9 ou 10, comprenant en outre :
la création du modèle mis à jour à partir des données reçues périodiquement ;
l'utilisation du modèle mis à jour pour générer des sorties ; et
la comparaison des sorties générées à partir des données reçues périodiquement aux sorties reçues à partir du système informatique sur site pour déterminer que le système informatique sur site est exécuté en dessous du seuil de qualité du modèle.

12. Dispositif infonuagique(105) :
un moyen de réception de données associées à un réseau informatique de dispositifs (140) ;
un moyen de génération d'un modèle de surveillance du réseau informatique ;
un moyen de communication du modèle à un système informatique (120) situé sur site avec le réseau informatique ;
un moyen de réception d'autres données associées au réseau informatique ;
un moyen de détermination que le système informatique sur site est exécuté en dessous d'un seuil de qualité du modèle ;
un moyen de mise à jour du modèle en fonction des données supplémentaires ; et
un moyen de communication du modèle mis à jour au système informatique situé sur site avec le réseau informatique ;
dans lequel le moyen de détermination que le système informatique sur site est exécuté en dessous d'un seuil de qualité du modèle comprend :
un moyen de calcul d'un modèle mis à jour en fonction des données supplémentaires et d'exploitation du modèle mis à jour par le dispositif infonuagique; et
un moyen de comparaison d'une sortie du modèle exploité par le système informatique sur site à une sortie du modèle mis à jour exploité par le dispositif infonuagique afin d'identifier que les sorties ne correspondent pas.

13. Dispositif infonuagique selon la revendication 12, comprenant en outre un moyen de mise en œuvre du procédé selon l'une quelconque des revendications 2 à 11.

14. Programme d'ordinateur, produit de programme d'ordinateur ou support lisible par ordinateur comprenant des instructions qui, lorsqu'elles sont exécutées par un ordinateur, amènent l'ordinateur à entreprendre les étapes du procédé selon l'une quelconque des revendications 1 à 11.
